# EUROPEAN PATENT APPLICATION

(11) **EP 0 786 208 A1**
(43) Date of publication of application: **30.07.1997**
(21) Application number: 97100903.0
(22) Date of filing: 22.01.1997
(51) Int. Cl.: A22C 21/00

(54) **Rotary shackle with yieldable lock**

(30) Priority: 23.01.1996 US 10466; 21.05.1996 US 651864
(71) Applicant: Systemate Holland B.V., NL-3280 AB Numansdorp (NL)
(72) Inventor: Hazenbroek, Jacobus E., 3286 LH Klaaswaal (NL); Schmidt, Michel, 3054 NM Rotterdam (NL)
(74) Representative: Patentanwälte Rehberg + Hüppe

(57) **Abstract**

The poultry support shackle (14) includes a trolley assembly (18) that moves along a conveyor track (12) and a bird hanger (20) that is rotatably mounted to the body (22) of the trolley. Ball detents (72) are threadedly received in the turning gear (70) and engage the detents (76) of the facing surface (34) of the clevis (26) of the trolley assembly, functioning to yieldably maintain the hanger (20) in a fixed predetermined relative rotary position with respect to the trolley assembly (18). In those instances where the bird (15) is to be passed through a processing machine and external forces are applied to the bird and therefore to the bird hanger, additional guide rails (16) are employed along the processing path so that the guide surfaces (80) of the turning gear move adjacent the facing guide surface (82) of the guide rail (16), thereby prohibiting rotary movement of the turning gear and the bird hanger.

## Description

### CROSS REFERENCE TO RELATED APPLICATION

Applicants claim priority to U.S. Provisional Application 60/010,466, filed in the U.S. Patent and Trademark Office on January 23, 1996.

### ROTARY SHACKLE WITH YIELDABLE LOCK

### FIELD OF THE INVENTION

This invention relates to a suspended conveyor line of a poultry processing plant, wherein birds are suspended by their legs on shackles, and the shackles carry the bird along a processing path where the birds are, for example, cut apart. More particularly, the invention relates to a shackle which can be rotated so as to present the bird in different positions to the cut up equipment, etc.

### BACKGROUND OF THE INVENTION

In modern poultry processing plants, chickens, turkeys and other birds raised for commercial slaughter are moved through a poultry processing line where they are sequentially defeathered, eviscerated, cut up, and packaged for shipment to wholesale and retail consumers. In such a plant, it is common for the poultry carcasses to be suspended by their legs from a suspended shackle conveyor. The conveyor typically includes a suspended conveyor rail and a series of bird support shackles, each of which includes a trolley for rolling along the conveyor rail and a bird hanger suspended below the trolley, with a drive chain connecting the shackles in equally spaced series. The bird hangers have a pair of spaced depending stirrups that are configured to receive and releasably hold the hocks of the birds.

With this arrangement, the workers can suspend birds by their legs or hocks from the shackles by slipping their hocks into the stirrups. The spaced suspension of the bird along the conveyor system allows the birds to be moved sequentially through the various processing stations, such as cut up machines, for serial processing of large numbers of the carcasses.

As poultry carcasses are processed at the various processing stations of the poultry line, the carcasses are turned to present the carcasses in various attitudes to the different processing machinery to accommodate each of the processing steps. In some of these stations, it is desirable to present the carcass breast first, and other stations back first, and still other stations side first. In order to turn the bird, poultry shackles have been developed which include a lower bird hanger that is rotatably mounted to the trolley assembly, and a turning gear mounted to the bird hanger. The turning gear typically has slots formed therein that engage turning pins spaced at predetermined intervals along the poultry processing path, so that when a slot of a turning gear reaches the turning pin, the turning gear "walks around" the turning pin, so as to rotate the bird hanger approximately 90°.

In order to keep the bird hanger from inadvertently rotating with respect to the trolley assembly, the turning gear typically includes flat surfaces about its periphery, and these flat surfaces are arranged to move adjacent guide rails extending parallel to and straddling the turning gear, so that no inadvertent turning of the bird hanger occurs.

While the above described rotary shackles have met with success in the poultry processing industry, there are times when a poultry conveyor system must be able to move the poultry shackles up and down inclines, around curves, and about combinations of curves and inclines. While the prior art turning gears and guide rails are effective to retain the bird hanger of a poultry shackle in an approximately fixed attitude along rectilinear runs of a conveyor system, the turning gears and their necessary guide rails are more difficult to construct and operate for movement of the shackles about curves and into inclines of the processing path, and the guide rails typically are interrupted at the positions along the path where the shackles negotiate a turn, etc. Therefore, it has been customary to move poultry shackles at certain intervals through a processing line without using the guide rails to maintain the poultry shackles in a fixed attitude. However, the poultry shackle is subject to being inadvertently rotated during such unguided runs along the poultry processing path. Also, when a bird hanger is rotated with respect to its trolley, it usually would be desirable for the bird hanger to rotate exactly 90° and positively retain the bird hanger in this exact rotary position, so that its bird would be positioned in the precise position for advancing to the next processing station.

### SUMMARY OF THE INVENTION

Briefly described, the present invention comprises a poultry processing conveyor system which includes a suspended conveyor track, a plurality of poultry shackles movable along the conveyor track by means of a continuous chain connected to each shackle, with each shackle having a trolley assembly movable along the suspended track and a bird hanger rotatably mounted to the trolley body for carrying a bird to be processed through a series of work stations. A turning gear is mounted to the bird hanger having slots formed therein for engagement with turning pins at predetermined positions along the processing line for turning the shackle with respect to the trolley assembly, to reorient the bird with respect to the direction of movement of the bird along the processing path. Rectilinear guide rails are positioned along the path of the turning gear in the vicinity of a processing machine, so that the bird hanger, and therefore the bird suspended from the hanger, are stabilized in the rectilinear movement of the bird through the processing station, so that the work on the bird will not inadvertently rotate the bird hanger with respect to its trolley.

A yieldable ball and detent structure engages between the trolley and bird hanger so as to retain the rotary position of the bird hanger with respect to the trolley during those instances where the turning gear of the bird hanger is not in engagement with a guide rail. With this arrangement, the shackle can change directions, such as beginning to move down or up an incline, or about a turn, without engagement with a guide rail and without the hazard of the bird hanger rotating with respect to the trolley assembly. Yet, this yieldable retaining means does not impede the rotation of the bird hanger with respect to the trolley when the turning gear engages a turning pin between processing stations. Further, once the turning gear has turned the bird hanger with respect to its trolley, the yieldable retaining means assures that the hanger turns to its exact desired rotary position and there will be no inadvertent rotation of the bird hanger with respect to the trolley after the turning of the bird hanger and before the shackle moves into engagement with the next oncoming guide rail.

Therefore, it is an object of this invention to provide an improved poultry processing line along which suspended poultry support shackles move in series, with the bird hangers of the shackles being rotatable with their supporting trolleys, and with the rotary position of the bird hangers being stabilized both while the suspended bird of the shackle is being moved through a cut up machine or other processing machine, and while the shackle is changing directions between processing stations, as by traversing inclines or curves along the processing path.

Another object of this invention is to provide a yieldable retaining means engaged between the turning gear and a bird support means of a rotary poultry carrier, which yieldably retains the desired rotary position of the bird support means.

Another object of this invention is to provide an improved poultry shackle for suspending birds by their legs as the birds are moved along a poultry processing line, which includes a yieldable locking device engaged between the bird hanger and the trolley, which yieldably maintains the bird hanger with respect to the trolley in predetermined relative rotary positions when the bird hanger is not otherwise prevented from rotating with respect to the trolley of the shackle.

Other objects, features and advantages of the present invention will become apparent upon reading the following specification, when taken in conjunction with the accompanying drawings.

### BRIEF DESCRIPTION OF THE DRAWINGS

Fig. 1 is a perspective illustration of a portion of a poultry processing line, showing adjacent ones of the poultry support shackles as they approach and then engage a guide rail of the conveyor system.

Fig. 2 is a front elevational view of one of the poultry support shackles of the conveyor system.

Fig. 3 is a side elevational view of the shackle of Fig. 2.

Fig. 4 is a bottom view of the shackle of Figs. 2 and 3.

Fig. 5 is a partial front elevational view of a poultry shackle, similar to Fig. 2, but showing portions in cross-section to reveal the yieldable retaining means.

Fig. 6 is a partial front elevational view of another form of the poultry shackle, similar to Fig. 2, but showing the yieldable retaining means oriented horizontally.

### DETAILED DESCRIPTION

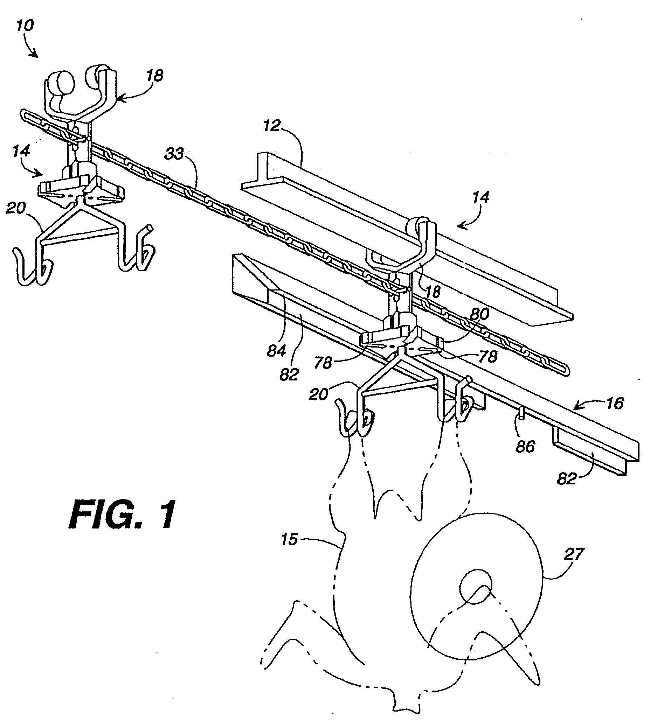

Referring now in more detail to the drawings in which like numerals indicate like parts throughout the several views, Figs. 1 illustrates a portion of a poultry processing line 10 which includes a conveyor track 12 suspended above the floor in the poultry processing plant, a plurality of poultry support shackles 14 which function as bird carrier means suspended on the conveyor track for transporting birds 15, and a rectilinear guide rail 16 positioned adjacent the path of the poultry support shackles 14. The conveyor track 12 is shaped in cross section as an inverted "T", and the shackles 14 each include a trolley assembly 18 which runs along the conveyor track 12, and a bird hanger 20 which functions as a bird support means suspended from the trolley assembly.

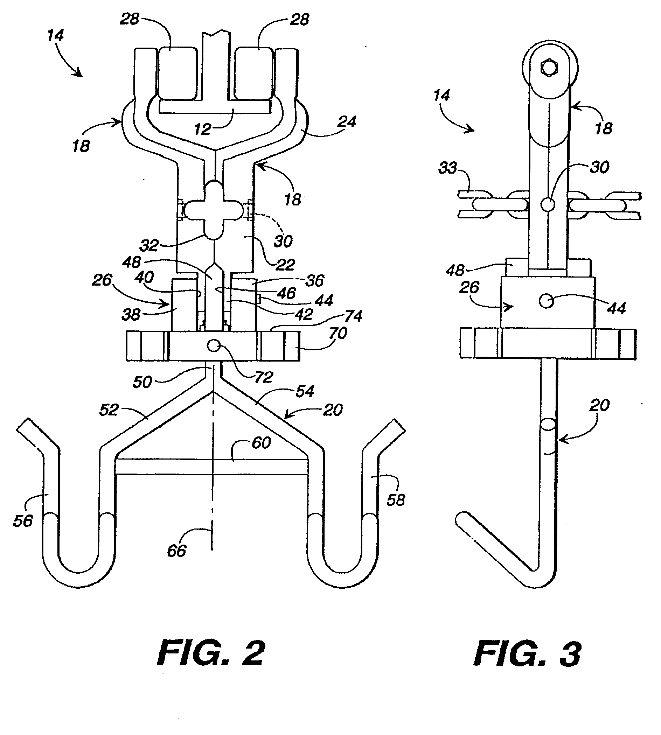

As illustrated in Fig. 2, the trolley assembly 18 which functions as a transport means includes a body 22, an upper wheel support yoke 24 and a lower bird hanger support clevis 26. Wheels 28 are rotatably mounted to the wheel support yoke 24 and are spaced apart a distance sufficient to ride on the conveyor track 12. The wheel support yoke 24 and body 22 are divided down the middle into complementary, interfitting shapes and are held together by a bolt 30. A chain link recess 32 is formed in the body 22 of the trolley assembly so that the halves of the body and trolley assemblies straddle a link of a loose link transport chain 33 (Fig. 3), thereby allowing each of the trolley assemblies 18 to be mounted to the chain 33 without requiring the chain to be divided into segments. Thus, the recess 32 functions as a chain connector means.

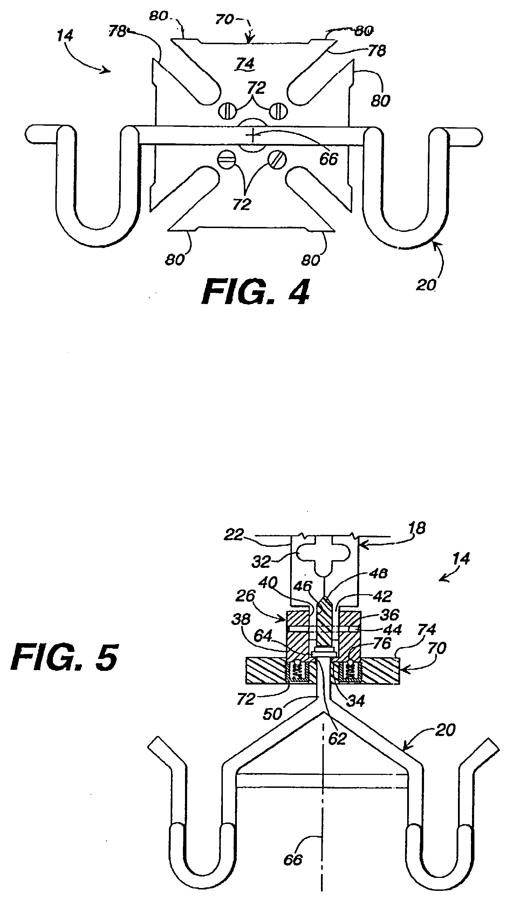

As best illustrated in Fig. 5, the bird hanger support clevis 26 includes a lower base 34 and upwardly extending side walls 36 and 38, which form an internal slot 40. The lower portion of body 22 of the trolley assembly includes a bifurcated neck 42 that is received in the slot 40 of clevis 26, and the neck 42 of the body 22 is connected to the clevis 26 by pin 44. The slot 46 of the bifurcated neck 42 is filled with stabilizer wedge 48.

Bird hanger 20 includes upper support stem 50, downwardly and outwardly diverging shoulders 52 and 54, and upwardly open forks or stirrups 56 and 58. Laterally extending stabilizer bar 60 extends between the forks 56 and 58. The hocks or legs of birds 15 (Fig. 1) are slidably received in the forks 56 and 58, in the conventional manner.

Upper support stem 50 of the bird hanger 20 extends upwardly through the lower base 34 of clevis 26, through the central opening 62 of the clevis, and a washer 64 is welded to the upper distal end of the stem 50. With this arrangement, bird hanger 20 is rotatable with respect to the body 22 of the shackle, about vertical axis 66.

Turning gear 70 is rigidly mounted to upper support stem 50 of the bird hanger 20 by means of a connector pin 72 (Fig. 2) which extends through aligned openings of the turning gear 70 and stem 50. The upper surface 74 of turning gear 70 is in contact with the lower facing surface of clevis 26.

As illustrated in Figs. 4 and 5, a plurality of ball detent screws 72, each of which includes a spring urged ball, are threaded upwardly into the turning gear 70 until the balls of each ball detent screw engages the facing surface of the clevis 26. The facing surface of the base 35 of the clevis includes detents 76 at 90° intervals thereabout. The ball detent screws are also oriented at 90° about the turning gear 70. Therefore, the balls of the ball detent screws will seat in a detent 76 of the clevis at 90° intervals of rotation of the bird hanger 20 with respect to the trolley assembly 18. Thus, the ball detent screws carried by the turning gear 70 and the detents 76 formed in the facing surface of the clevis 34 function as yieldable retaining means, to retain the bird hanger 20 in a fixed rotary relationship with respect to the trolley assembly 18 of the shackle, so that the bird hanger will not inadvertently rotate with respect to the trolley assembly.

As shown in Fig. 4, turning gear 70 includes slots 78 at 90° intervals thereabout. The lateral surface of the turning gear between the slots 78 are formed with guide surfaces 80. The guide surfaces are oriented in planes that intersect 90° radians that extend from central axis 66.

As illustrated in Fig. 1, the turning gear 70 is moved adjacent a pair of guide rails 16 (only one shown) with the guide rail straddling the turning gear. Each guide rail 16 includes an inwardly facing vertical surface 82 that extends along the length of the guide rail. A downwardly facing guide surface 84 is formed so as to intersect the vertical guide rail 82.

The guide rails 16 are arranged in pairs (only one shown), with the guide rails straddling the turning gear 70. The guide surfaces 80 of the turning gear move in close proximity to the guide surface 82, so that the turning gear cannot rotate while it is straddled by the guide rails 16. In this manner, the bird hanger 20 is firmly maintained in a fixed orientation with respect to the trolley assembly 18, so that the bird 15 suspended from the bird hanger will not rotate as the bird passes a processing station, such as a processing station 27 (Fig. 1) that includes cutters for removing the wings of a bird. Once the bird 15 has passed through the processing station 27, the external forces which were applied to the bird and bird hanger by the processing station 27 would no longer be applied, and the bird can be moved without being stabilized by the rectilinear guide surfaces 82 and 84. Further, the shackle 14 can be moved past a turning pin 86, where one of the turning slots 78 will engage the pin, so that the turning gear and bird hanger rotate 90°. In order to permit rotation of the turning gear, the vertical guide surface 82 of the guide rail 16 is broken at 88. A similar break is formed in the opposing guide rail (not shown) that guides the other side of the turning gear 70. Once the turning gear has been rotated to its new 90° orientation, the side guides 82 resume their stabilizing function as the bird is carried to another processing station.

The ball detents 72 of the turning gear 70 and clevis 26 assure that the bird hanger 20 will be rotated exactly 90°. The ball detent structure retains the bird hanger in its fixed rotary position with respect to the trolley assembly until the turning pin 86 is engaged by one of the slots of the turning gear 70, whereupon the ball detent structure yields against the bias of the springs of the ball detent structures. When the 90° rotation has been achieved, the balls of the ball detent structures reseat themselves in the next adjacent detents of the clevis 34.

There are times when the poultry support shackles 14 will be required to change directions, as when changing to descend an incline or changing to ascend an incline, or when changing to move around a curve in the poultry line. In those instances where the shackle is changing directions, the guide rails typically will not extend through the portion of the path where the direction change is present and no processing equipment is located at the change of direction. However, changes in directions tend to cause the bird 15 and the bird hanger 20 to rotate out of the desired position with respect to the trolley assembly 18. With this invention, the ball detent structure 72 retains the bird 15 and bird hanger 20 in the desired rotary attitude with respect to the trolley 18, So that when the bird and shackle have reached a rectilinear portion of the processing line, the bird and hanger are still properly oriented and the turning gear 70 can again be moved between adjacent ones of the guide rail 16 for further processing of the bird.

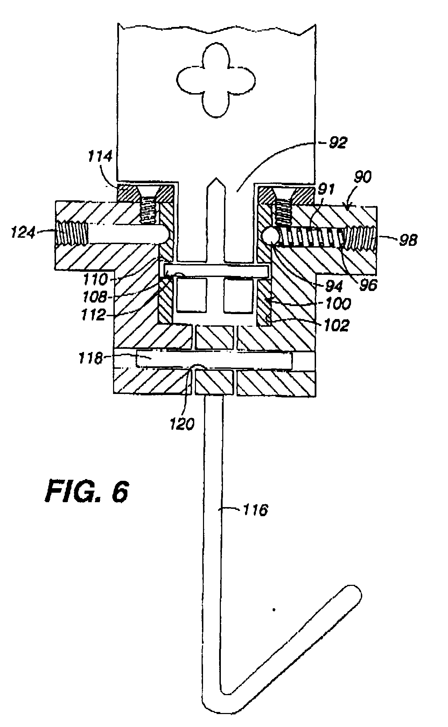

Fig. 6 shows a second embodiment of the invention, wherein the yieldable retaining means is oriented horizontally. More specifically, the turning gear 90 includes a ball, spring bore 91 which extends radially inwardly from the perimeter of the turning gear toward the lower clevis 92. A ball 94 is received in the bore, with a coil compression spring 96 placed behind it, with these elements being trapped in the bore by threaded plug 98. Positioning sleeve 100 is positioned in the internal cylindrical opening 102 of the turning gear 90 and includes outwardly facing detents 106 at 90° intervals thereabout. The sleeve 100 is connected to clevis 92 by connector pin 108 which extends through aligned openings 110 and 112 of the sleeve and clevis, respectively. Retaining ring 114 is fastened to turning gear 90 by screws and traps the positioning sleeve 100 in the internal cylindrical opening 102 of the turning gear.

Bird hanger 116 is connected at its upper end to turning gear 90, by connector pin 118 extending through aligned openings 120 of the shackle and 122 of the turning gear.

The turning gear 90 is rotatably connected to the bird hanger 116 by means of a connector pin 118. Therefore, when the turning gear 90 is turned in a manner as previously described, the turning gear will rotate the bird hanger 116. The ball 94 of the ball detent assembly will ride on the cylindrical surface of the sleeve 100 until the bird hanger has been rotated 90°, whereupon the ball 94 will be aligned with another one of the detents 106, and become seated in the detent. This yieldably retains the bird hanger in the 90° position.

In the embodiment disclosed in Fig. 6, only one ball and spring assembly has been described. Other bores 124 can be formed in the turning gear, if desired, and the bores can be used for additional ball and spring assemblies, or for other apparatus, such as a detector for determining the proper alignment of the turning gear with respect to the clevis 92.

It will be understood by those skilled in the art that while the present invention has been disclosed with reference to preferred embodiments, various modifications, changes and additions can be made thereto without departing from the spirit and scope of the invention, as set forth in the following claims.

## Claims

1. A poultry shackle for suspending birds by their legs as the birds are moved along a poultry processing line comprising:
a trolley assembly including a body, wheel means connected to said body for rolling along a rail and for suspending said body from the rail as the trolley assembly moves along the poultry processing path;
a bird hanger rotatably mounted to said trolley body, said bird hanger including receptacles for suspending a bird by its legs as the bird hanger moves along the poultry processing path;
a rotary turning gear mounted to said bird hanger for turning said bird hanger with respect to said trolley in response to said turning gear engaging a turning pin; and
yieldable retaining means engaged between said turning gear and said trolley for yieldably maintaining said hanger and said trolley in predetermined relative rotary positions.

2. The poultry shackle of claim 1 and wherein said yieldable retaining means comprises ball and spring means carried by said turning gear and detent means carried by said transport means for receiving said ball and spring means.

3. The poultry shackle of claim 2 and wherein said rotary turning gear has an axis of rotation and four guide surfaces are formed on said turning gear in planes oriented at right angles to radians extending from said axis of rotation for engagement with guide surfaces along a poultry processing line.

4. The poultry shackle of claim 1 and wherein said transport means includes chain connector means for connection to a transport chain, so that the chain moves parallel to the poultry processing line and the transport chain pulls the carrier means along the poultry processing line.

5. In a poultry processing line including a suspended conveyor system for carrying a series of birds suspended by their legs and poultry processors spaced along said conveyor system and adapted to process the birds carried by said conveyor system, the improvement therein comprising:
said suspended conveyor system including a conveyor track and guide surfaces extending along said conveyor track adjacent said poultry processors;
a plurality of shackles in spaced series suspended from said conveyor track;
a loose link chain extending beneath said conveyor track and connected to each of said shackles for pulling said shackles along said conveyor track;
said shackles each including a trolley assembly comprising a body, wheel means connected to said body for rolling along said conveyor track and for suspending said body from said conveyor track as the trolley assembly moves along the poultry processing line;
a bird hanger rotatably mounted to said trolley body and including means for suspending therefrom birds by their legs;
a turning gear mounted to said bird hanger for turning said bird hanger with respect to said trolley;
said turning gear including external guide means movable closely adjacent said conveyor track guide surfaces for prohibiting the turning of said bird hanger with respect to said trolley assembly while said turning gear moves adjacent said conveyor track guide means; and
yieldable retaining means engaged between said turning gear and said trolley for yieldably maintaining said hanger and said trolley in predetermined relative rotary positions while said turning gear does not move adjacent said conveyor track guide surfaces.

6. In a poultry processing system for transporting birds along a poultry processing line comprising:
a conveyor;
carrier means mounted on said conveyor for moving each bird along a processing path, said carrier means
including a transport means and a bird support means; means rotatably mounting said bird support means to said transport means;
a rotary turning gear mounted to said bird support means for turning said bird support means with respect to said transport means in response to said turning gear engaging a turning pin; and
yieldable retaining means engaged between said transport means and said bird support means for yieldably maintaining said bird support means and said transport means in predetermined relative rotary positions.
